## Europäisches Patentamt

## European Patent Office

## Office européen des brevets

(11) Veröffentlichungsnummer: **0 191 009**

**B1**

# EUROPÄISCHE PATENTSCHRIFT

(45) Veröffentlichungstag der Patentschrift:
29.03.89

(51) Int. Cl.⁴: **C 10 J  3/12**

(21) Anmeldenummer: **86890015.0**

(22) Anmeldetag: **31.01.86**

(54) **Verfahren zur Erzeugung teerarmer Brenngase und Brennstoffvergasungsanlage zur Durchführung des Verfahrens.**

(30) Priorität: **07.02.85 AT 348/85**

(43) Veröffentlichungstag der Anmeldung:
**13.08.86 Patentblatt 86/33**

(45) Bekanntmachung des Hinweises auf die Patenterteilung:
**29.03.89 Patentblatt 89/13**

(84) Benannte Vertragsstaaten:
**BE CH DE FR GB IT LI LU NL SE**

(56) Entgegenhaltungen:
**EP-A-0 051 482
DE-B-1 223 094
DE-C-170 050
US-A-2 657 501
US-A-3 008 815
US-A-4 069 107**

(73) Patentinhaber: **WAAGNER- BIRO
AKTIENGESELLSCHAFT, Stadlauer- Strasse 54
Postfach 11, A-1221 Wien (AT)**

(72) Erfinder: **Beckmann, Georg, Dr. Dipl.- Ing.,
Jacquingasse 55/10, A-1030 Wien (AT)**
Erfinder: **Wolf, Bodo, Dr.- Ing., Forstweg 9, DD-
8210 Freital (DD)**
Erfinder: **Hillinger, Bruno, Dr. Dipl.- Ing.,
Dreisteingasse 20, A-2371 Hinterbrühl (AT)**

(74) Vertreter: **Wallner, Gerhard, Dipl.- Ing., Waagner-
Biro Aktiengesellschaft Patentreferat Postfach
11, A-1221 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Erzeugung teerarmer Generatorgase aus einem festen bituminösen Brennstoff in zwei übereinander in einem Generator angeordneten Behandlungszonen durch Wärmeeinwirkung und Kontaktaufnahme mit einem zumindest teilweise Wasserdampf und Sauerstoff hältigen Vergasungsmittel, wobei ein Teil der benötigten Wärme durch teilweise Verbrennung des Brennstoffes und ein anderer Teil durch Rückführung der Prozeßabwärme in den Generator über erhitzte Ballastkörper (Feststoffkörper) erfolgt, die mit dem Brennstoff durchmischt durch die Vergasungszonen geführt und aus der Asche entnommen wieder dem Brennstoff zugeführt werden, und eine Brennstoff-, insbesondere Braunkohlenvergasungsanlage, zur Durchführung des Verfahrens. Es ist eine Reihe von Verfahren und Einrichtungen zur Erzeugung von Brenngasen aus festen Brennstoffen bekannt, die jedoch den Nachteil aufweisen, daß die erzeugten Brenngase relativ heiß anfallen und daß gleichzeitig zur Trocknung der zu vergasenden Brennstoffe bzw. zu ihrer Vorerwärmung artfremde Wärmezuführung notwendig ist, die zum Teil durch teilweise Verbrennung des zu vergasenden Brennstoffes zur Verfügung gestellt wird. Dazu kommt noch, daß der Aschegehalt des zu vergasenden Brennstoffes für die kontinuierliche Vergasung der Brennstoffe ein Kriterium darstellt, so daß Brennstoffe mit geringstem Aschegehalt nicht in derartigen Vergasern vergast werden können. Aus der CH-PS-283 414 ist es bekannt, Generatorgas zu erzeugen, indem Festkörper zuerst in einer Fremdfeuerung erhitzt und dann mit dem zu vergasenden Brennstoff durchmischt und entgast werden. Das entgaste Aschen-Festkörper-Gemisch wird dann durch Verdampfung von eingespritzter Flüssigkeit abgekühlt. Das erzeugte Generatorgas wird gekühlt dem Verbraucher zugeführt. Anstelle von festen Brennstoffen (US-PS-1 977 684 und 2 590 869) kann auch ein Gas (Methan) verwendet werden, wobei durch Crack-Prozesse CO und $H_2$ erzeugt wird. In keinem dieser Vorschläge werden zur Wärmerückgewinnung die Festkörper am heißen Generatorgase bzw. CO/$H_2$-Gemisch erhitzt. Ebenfalls wird nicht das Vergasungsmittel oberhalb und unterhalb des Generatorgasabzuges in den Apparat eingespeist, so daß in einem Apparat zwei Vergasungszonen auftreten. Dies bewirkt neben der Erhöhung des Brennstoffverbrauches auch eine Vergrößerung des Anlagevolumens, so daß die Wirtschaftlichkeit insbesondere bei hohen Brennstoffpreisen in Frage gestellt erscheint.

Die Erfindung hat es sich zur Aufgabe gestellt, diesen Schwierigkeiten zu begegnen und somit die Wärmewirtschaft zu verbessern. Durch das erfindungsgemäße Verfahren erhöht sich naturgemäß der Vergasungsrückstand, so daß auch aschenfreie Brennstoffe wie z. B.

Klärschlamm durch das erfindungsgemäße Verfahren vergast werden können, wodurch die Brennstoffpalette vergrößert wurde.

Das erfindungsgemäße Verfahren ist dadurch gekennzeichnet, daß die Ballastkörper vor der Mischung mit dem Brennstoff mit dem heißen teerhaltigen Generatorgas in einem Kontaktapparat in Berührung gebracht und an diesem erhitzt werden, und daß das Vergasungsmittel ober- und unterhalb der Vergasungszone in den Generator unter Bildung zweier Vergasungsfronten eingebracht wird, wobei zwischen den Vergasungsfronten das heiße Generatorgas abgezogen wird. Wesentliche Verfahrensmerkmale zur Ausgestaltung des Verfahrens sind in den Unteransprüchen 2 bis 6 angegeben. Die erfindungsgemäße Brennstoff-, insbesondere Braunkohlenvergasungsanlage ist dadurch gekennzeichnet, daß in der Generatorgasentnahme zwischen dem Generator und dem Verbraucher ein Kontaktapparat vorgesehen ist, in welchem abgekühlte Ballastkörper in direkten Kontakt mit dem heißen Generatorgas gebracht werden und von welchem eine Leitung für aufgeheizte Ballastkörper in den Einfüllschacht für Brennstoffe in den Generator geführt ist.

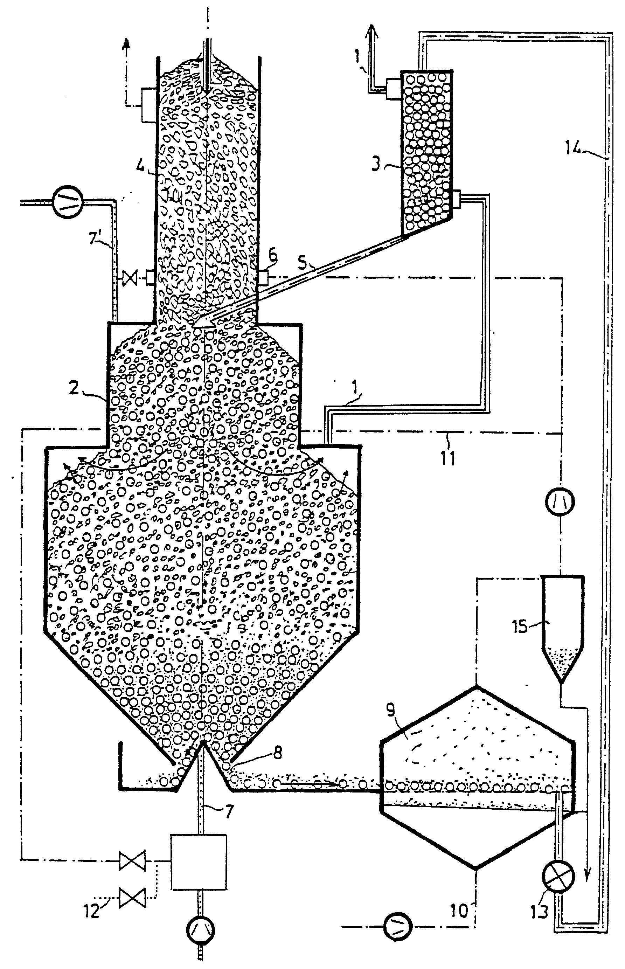

Die Erfindung ist in der angeschlossenen Figur beispielsweise und schematisch dargestellt. Die Figur zeigt das Schaltbild einer Vergasungsanlage.

In einem Generator 2 zur Vergasung fester Brennstoffe ist die Generatorgasentnahmeleitung 1 mischen zwei Vergasungszonen angeordnet, wobei das Vergasungsmittel über zwei Anschlußleitungen 7,7' in den Vergaser eingebracht wird. Das Vergasungsmittel, das über die Leitung 7 eingeführt wird, strömt im Gegenstrom zum vergasenden Brennstoff durch den Generator bzw. wird am Brennstoff verbraucht und in das Generatorgas umgewandelt, welches dann über die Generatorgasentnahmeleitung 1 abgeführt wird. Die Anschlußleitung 7' bringt ein Vergasungsmittel in den Generator, welches im Gleichstrom zum aufgegebenen Brennstoff den Generator durchströmt, wobei das erzeugte Generatorgas ebenfalls über die Leitung 1 abgeführt wird. Der zu vergasende Brennstoff wird über den Einfüllschacht 4 in den Generator eingebracht, wobei nahe dem Anschluß der Anschlußleitung 7' eine Leitung für heiße Ballastkörper in das Brennstoffbett mündet, die den zu vergasenden Brennstoff erhitzen, so daß zur Erreichung der Vergasungstemperatur nur mehr wenig oder fast gar keine zusätzliche Wärmeenergie notwendig ist. Die heißen Ballastkörper werden in einem Kontaktapparat 3 vom heißen erzeugten Generatorgas umströmt, wobei das Generatorgas abgekühlt und die Ballastkörper erhitzt werden. Durch diese Ballastkörper werden ferner die auskondensierenden Teerteilchen und allenfalls noch Staub eingefangen und mit den Ballastkörpern wieder in das Brennstoffbett eingebracht, wo sie durch den Kontakt mit dem Vergasungsmittel im Generatorgas umgewandelt werden. Die Ballastkörper durchströmen im Gleichstrom mit dem Brennstoff den Generator und werden am Aschenabzug 8 aus dem Generator entnommen und in einen Siebapparat 9 eingebracht, in welchem gleichzeitig auch die Kühlung der mitgenommenen Asche vor sich geht. In diesem Siebapparat wird das durch die Leitung 10 aus einer nicht dargestellten Verbrennungsanlage eingebrachte Rauchgas oder auch Luft von den heißen Ballastkörpern erhitzt, wobei das heiße Rauchgas über den Anschluß 6 zur Vorerhitzung des Brennstoffes im Einfüllschacht 4 Verwendung findet. Ein Teilstrom dieses Gases, welches $CO_2$ und auch Wasserdampf enthält, wird über die Leitung 11 der Anschlußleitung 7 für das Vergasungsmittel beigemischt, so daß das Vergasungsmittel mit $CO_2$ und/oder $H_2O$ angereichert und auch erhitzt wird. Zur weiteren Wasserdampfanreicherung kann über die Leitung 12 auch Frischdampf zugemischt werden. Am Ausgang des Siebapparates 9 ist eine Schleuse 13 angebracht, so daß durch die Förderleitung 14 kein Sauerstoff in den Kontaktapparat 3 gelangen kann, um dort mit dem heißen Generatorgas zu reagieren. In der Leitung 11 ist ferner ein Zyklon 15 angeordnet, über den etwa mitgerissene Ascheteilchen abgeschieden werden.

Im Bahnen der Erfindung ist es selbstverständlich auch möglich, vor dem Siebapparat 9 einen Wärmetauscher anzuordnen, in dem Luft erhitzt wird, die zur Trocknung des feuchten zu vergasenden Brennstoffes verwendet wird. Dies ist insbesondere dann vonnöten, wenn Klärschlamm, eventuell zusammen mit Braunkohle, vergast werden soll.

## Patentansprüche

1. Verfahren zur Erzeugung teerarmer Generatorgase aus einem festen bituminösen Brennstoff in zwei übereinander in einem Generator angeordneten Behandlungszonen durch Wärmeeinwirkung und Kontaktaufnahme mit einem zumindest teilweise Wasserdampf und Sauerstoff hältigen Vergasungsmittel, wobei ein Teil der benötigten Wärme durch teilweise Verbrennung des Brennstoffes und ein anderer Teil durch Rückführung der Prozeßabwärme in den Generator über erhitzte Ballastkörper erfolgt, die mit dem Brennstoff durchmischt durch die Vergasungszonen geführt und aus der Asche entnommen wieder dem Brennstoff zugeführt werden, dadurch gekennzeichnet, daß die Ballastkörper vor der Mischung mit dem Brennstoff mit dem heißen teerhaltigen Generatorgas in einem Kontaktapparat in Berührung gebracht und an diesem erhitzt werden, und daß das Vergasungsmittel ober- und unterhalb der Vergasungszonen in den Generator unter Bildung zweier Vergasungsfronten eingebracht wird, wobei zwischen den Vergasungsfronten das heiße Generatorgas abgezogen wird.

2. Verfahren nach Anspruch 1, dadurch gekennzeichnet, daß die Lage der Vergasungsfronten durch Mengenregelung des oberhalb und unterhalb der Generatorgasentnahmestelle eingeblasenen Vergasungsmittels geregelt wird.

3. Verfahren nach Anspruch 1, dadurch gekennzeichnet, daß zur Temperaturregelung der Vergasungszone dem unterhalb der Generatorgasenthnahmestelle eingeblasenen Vergasungsmittel Wasserdampf und/oder $CO_2$ zugemischt wird.

4. Verfahren nach Anspruch 1, dadurch gekennzeichnet, daß die Ballastkörper von der Feinasche durch Absiebung getrennt werden.

5. Verfahren nach Anspruch 1, dadurch gekennzeichnet, daß im Kontaktapparat die gegenüber dem Generatorgas kälteren Ballastkörper als Filtermaterial für auskondensierende Teertropfen und Staub im erzeugten Generatorgas dienen, die an der Oberfläche der Ballastkörper gesammelt werden und mit diesen zur Erhitzung des Brennstoffes in die Brennstoffaufgabezone des Generators zurückgeführt werden.

6. Verfahren nach Anspruch 1, dadurch gekennzeichnet, daß die Ballastkörper beim Austritt aus dem Generator in einem Luft- oder Abgasstrom gekühlt werden, und der erhitzte Luft- oder Abgasstrom zur Trocknung oder Eindickung des feuchten Brennstoffes vor seiner Aufgabe in den Generator verwendet wird.

7. Brennstoffvergasungsanlage-, insbesondere Braunkohlenvergasungsanlage, zur Durchführung des Verfahrens nach mindestens einem der Ansprüche 1 bis 6, dadurch gekennzeichnet, daß in der Generatorgasentnahmestelle (1) zwischen dem Generator (2) und dem Verbraucher ein Kontaktapparat (3) vorgesehen ist, in welchem abgekühlte Ballastkörper in direkten Kontakt mit dem heißen Generatorgas gebracht werden und von welchem eine Leitung (5) für aufgeheizte Ballastkörper in den Einfüllschacht (4) für Brennstoffe in den Generator (2) geführt ist.

8. Brennstoffvergasungsanlage nach Anspruch 7, dadurch gekennzeichnet, daß der Einfüllschacht (4) als Vortrockner für den Brennstoff ausgebildet ist und daß in diesem oberhalb der Einführung der Leitung (5) für aufgeheizte Ballastkörper ein Anschluß (6) für vorgewärmtes trockenes Gas, wie z. B. Rauchgas, vorgesehen ist, von welchem das Gas im Gegenstrom zum Brennstoff, diesen umspülend, geführt ist.

## Claims

1. Process for producing a tar-free generator gas out of solid bituminous fuel under the influence of heat and by coming into contact with a gasification agent containing at least partially water vapour and oxygen in two treatment areas which are located on top of each other in a generator, whereby part of the necessary heat is produced by partly burning the fuel and another part by recycling process waste heat into the generator via heated nonparticipating substances which are mixed with the fuel and led through the gasification areas and after having been taken from the ash are remixed with the fuel, characterized in that the nonparticipating substances are brought into contact with the hot tar-containing generator and are heated in a contact apparatus before being mixed with the fuel, and that the gasification agent is brought into the generator above and underneath the gasification areas thus forming two gasification fronts, the hot generator gas being drawn off between the gasification fronts.

2. Process according to claim 1, characterized in that the position of the gasification fronts is adjusted by adjusting the quantity of the gasification agent which is injected above and underneath the extraction area of the generator gas.

3. Process according to claim 1, characterized in that water vapour and/or $CO_2$ is mixed with the gasification agent which is injected underneath the extraction area of the generator gas in order to adjust the temperature in the gasification area.

4. Process according to claim 1, characterized in that the nonparticipating substances are separated from the fine ash by screening.

5. Process according to claim 1, characterized in that the nonparticipating material which is colder than the generator is used in the contact apparatus as filtering material for condensing tar droplets and dust in the produced generator gas which are collected on the surface of the nonparticipating material and are recycled together with the nonparticipating substances into the fuel loading area of the generator in order to heat the fuel.

6. Process according to claim 1, characterizied in that the nonparticipating substances at the exit of the generator are cooled in an air or waste gas flow and that the heated air or waste gas flow is used for drying or thickening the humid fuel before its entry into the generator.

7. Fuel gasification plant, in particular brown coal gasification plant in order to carry out the process according to at least one of the claims 1 to 6, characterized in that in the generator gas extraction line (1) between the generator (2) and the consumer a contact apparatus (3) has been provided in which cooled nonparticipating substances are brought into direct contact with the hot generator gas and from which a duct (5) for heated nonparticipating substances leads to the fuel charging shaft (4) into the generator (2).

8. Fuel gasification plant according to claim 7, characterized in that the charging shaft (4) has been constructed as preliminary dryer of the fuel and above the entrance of the duct (5) for heated nonparticipating substances contains a joining pipe (6) for preheated dry gas such as flue gas, after which the gas washes around the fuel in a countercurrent washing motion.

**Revendications**

1. Procédé pour la production d'un gaz de gazéificateur pauvre en goudron à partir d'un combustible solide bitumineux en deux zones de traitement superposés d'un gazéificateur par l'action de la chaleur et la prise de contact avec un agent de gazéification contenant au moins partiellement de la vapeur d'eau et de l'oxygène, une partie de la chaleur requise étant produite par la combustion partielle du combustible et une autre partie par le recyclage de la chaleur du procédé dans le générateur moyennant des substances de lest chauffées, qui sont mélangées avec le combustible et ainsi traversent les zones de gazéification et qui sont retirées des cendres pour être ramenées au combustible, caractérisé en ce que les substances de lest avant d'être mélangées avec le combustible sont mises en contact avec le gaz de gazéificateur chaud et goudronneux dans un appareil de contact dans lequel elles sont chauffées, et en ce que l'agent de gazéification est introduit dans le gazéificateur en dessous et en dessus des zones de gazéification en formant deux fronts de gazéification, le gaz de gazéificateur chaud étant retiré entre les fronts de gazéification.

2. Procédé suivant revendication 1, caractérisé en ce que la position des fronts de gazéification est réglée par la quantité d'agent de gazéification injecté en dessous et en dessus du point d'extraction du gaz de gazéificateur.

3. Procédé suivant revendication 1, caractérisé en ce que de la vapeur d'eau et/ou $CO_2$ sont mélangés avec l'agent de gazéification injecté en dessous du point d'extraction du gaz de gazéificateur.

4. Procédé suivant revendication 1, caractérisé en ce que les substances de lest sont séparées des cendres fines par tamisage.

5. Procédé suivant revendication 1, caractérisé en ce que les substances de lest qui sont plus froides que le gaz de gazéificateur sont utilisées dans l'appareil de contact en tant que substances filtrantes pour des gouttes de goudron et de poussière qui se condensent dans le gaz de gazéificateur produit et qui sont assemblées à la surface des substances de lest et recyclées avec celles-ci dans la zone de chargement du combustible dans le gazéificateur pour chauffer le combustible.

6. Procédé suivant revendication 1, caractérisé en ce que les substances de lest sont refroidies à la sortie du gazéificateur dans un courant d'air ou de gaz de fumée et que le courant d'air ou de gaz de fumée chauffé est utilisé pour sécher et épaissir le combustible humide avant sa charge dans le gazéificateur.

7. Installation de gazéification de combustible, en particulier installation de gazéification de lignite pour la mise en oevre du procédé suivant au moins une des revendications 1 à 6, caractérisée en ce que la conduite d'extraction du gaz de gazéificateur (1) entre le gazéificateur (2) et le consommateur est équipée d'un appareil de contact (3) dans lequel les substances de lest refroidies sont mises en contact direct avec le gaz de gazéificateur chaud et duquel part une conduite (5) pour des substances de lest chauffées qui mène à la cheminée de chargement (4) des combustibles au gazéificateur (2).

8. Installation de gazéification suivant revendication 7, caractérisée en ce que la cheminée de chargement (4) est utilisée comme sécheur préliminaire du combustible et qu'elle est équipée d'un tuyau de raccordement (6) pour gaz sec préchauffé, comme par exemple gaz de fumée, qui se trouve en dessus de l'entrée d'une conduite (5) pour des substances de lest chauffées et à partir duquel le gaz entourant le combustible est guidé à contre-courant du combustible.